# EUROPEAN PATENT APPLICATION

(11) **EP 4 138 078 A1**
(43) Date of publication of application: **22.02.2023**
(21) Application number: 21191813.1
(22) Date of filing: 18.08.2021
(51) Int. Cl.: G11C 11/401, G06F 21/79, G06F 12/14, G11C 7/24

(54) **A METHOD FOR PROTECTING A DRAM MODULE AGAINST ROWHAMMER ATTACKS, AND A DRAM MODULE**

(71) Applicant: ETH Zurich, 8092 Zurich (CH)
(72) Inventor: RAZAVI, Kaveh, 8006 Zürich (CH); MARAZZI, Michele, 8050 Zürich (CH)

(57) **Abstract**

The invention relates to a method for protecting a DRAM module (1) against a Rowhammer attack during operation of the DRAM module (1). The DRAM module (1) comprises at least one rank (2), wherein each rank of the at least one rank (2) comprises at least one bank (3), and wherein each bank of the at least one bank (3) comprises a matrix of cells (4) having a plurality of matrix rows, wherein each cell of the matrix of cells (4) is configured to store information in a state of a capacitor comprised by said cell, and wherein each matrix row of the plurality of matrix rows comprises a row address through which the matrix row is addressable. The method uses (a) a summary table (5) having at most *N* entries, wherein each entry of the at most *N* entries is configured for storing a row address (6) and a corresponding count (7) indicative of a number of access operations carried out on the matrix row corresponding to the stored row address, and a spillover counter (8), (b) a target row refresh (TRR) event (9) to be carried out by the DRAM module (1), (c) a TRR volume *V* (10) corresponding to a refresh number of matrix rows which are to be refreshed at the TRR event (9), and (d) a last spillover counter refresh time. The method comprises as steps: 1) receiving a victim row address (11) of a victim matrix row susceptible to the Rowhammer attack and an aggressor row address (11) of an aggressor matrix row related to said victim matrix row, 2) determining (13) if said victim row address is stored in the summary table, and determining (13) if said aggressor row address (11) is stored in the summary table, and 3) (i) incrementing (13) the count in the summary table (5) corresponding to the victim row address (11) in case the victim row address is already stored in the summary table (5), and/or pruning (13) the row address and the corresponding count corresponding to the aggressor row address (11) from the summary table (5) in case the aggressor row address is already stored in the summary table (5), or (ii) adding (13) the victim row address (11) to the summary table (5) in case less than *N* row addresses are stored in the summary table, and setting (13) the corresponding count to the added victim row address to '1', or (iii) incrementing (13) the spillover counter (8) in case the victim row address (11) is not stored in the summary table (5) and in case *N* row addresses are already stored in the summary table, comparing (13) the count of the incremented spillover counter to the counts in the summary table to identify a potential replacement entry in the summary table with a corresponding replacement count below the count of the incremented spillover counter, and replacing (13) the stored row address of the replacement entry, in case said replacement entry exists, with the victim row address (11) and the corresponding replacement count with the count of the incremented spillover counter, 4) refreshing (12), subsequent to the TRR event (9), *V* (10) matrix rows of the matrix of cells (4), the refreshed *V* (10) matrix rows corresponding to the stored row addresses in the summary table (5) with the *V* highest corresponding counts at the TRR event (9), and pruning (12) the stored row addresses and the corresponding counts corresponding to the *V* refreshed matrix rows from the summary table (5), determining if the TRR event (9) is temporally removed from the last spillover counter refresh time by a defined time tREFW, and setting the spillover counter (8) to zero and pruning all stored row addresses and the corresponding counts from the summary table (5) in case the TRR event (9) is temporally removed from the last spillover counter refresh time by the defined time tREFW. There is further provided a DRAM module which is secure against Rowhammer attacks.

## Description

### Field of the invention

The present invention relates to a method for protecting a DRAM module against Rowhammer attacks, and to a DRAM module which is secure against Rowhammer attacks.

### Background to the invention

Rowhammer is a well-known security vulnerability affecting dynamic random-access memory (DRAM). In DRAM, each bit of information is stored in a separate memory cell comprising a capacitor and a transistor. The memory cells are arranged in matrices having rows and columns. The capacitors in DRAM have a natural discharge rate, requiring periodic refreshes of all memory cells to keep stored information intact.

Rowhammer exploits the following property of DRAM: if a row, termed aggressor row, is sufficiently often accessed in a specified period of time, then a neighboring row of the aggressor row, termed victim row, may experience changes to the information it stores, i.e., bits in the victim row may flip. With increasing integration density of the DRAM due to improvements in manufacturing, future generations of DRAM may be more susceptible to Rowhammer-type attacks as it becomes more difficult to electrically isolate neighboring memory cells from one another.

In the prior art, methods for protecting against Rowhammer have been proposed which are designed to modify a memory controller accessing a DRAM. It was, e.g., proposed to double a refresh rate of the memory cells. A further proposal was to mitigate Rowhammer in software, e.g., in an operating system. These proposals in the state of the art are known to still be vulnerable to Rowhammer attacks.

It is an object of the present invention to mitigate at least some of the disadvantages associated with the methods from the state of the art which are used for protecting DRAM against Rowhammer attacks. Another object of the present invention is to provide a DRAM module which is secure against Rowhammer attacks.

### Summary of the invention

According to a first aspect of the present invention there is provided a method for protecting a DRAM module against a Rowhammer attack during operation of the DRAM module involving the steps recited in claim 1. Further features and embodiments of the method of the present invention are described in the dependent patent claims.

The invention relates to a method for protecting a DRAM module against a Rowhammer attack during operation of the DRAM module. The DRAM module comprises at least one rank, wherein each rank of the at least one rank comprises at least one bank, and wherein each bank of the at least one bank comprises a matrix of cells having a plurality of matrix rows, wherein each cell of the matrix of cells is configured to store information in a state of a capacitor comprised by said cell, and wherein each matrix row of the plurality of matrix rows comprises a row address through which the matrix row is addressable. The method uses (a) a summary table having at most N entries, wherein each entry of the at most N entries is configured for storing a row address and a corresponding count indicative of a number of access operations carried out on the matrix row corresponding to the stored row address, and a spillover counter, (b) a target row refresh (TRR) event to be carried out by the DRAM module, (c) a TRR volume *V* corresponding to a refresh number of matrix rows which are to be refreshed at the TRR event, and (d) a last spillover counter refresh time. The method comprises as steps: 1) receiving a victim row address of a victim matrix row susceptible to the Rowhammer attack and an aggressor row address of an aggressor matrix row related to said victim matrix row, 2) determining if said victim row address is stored in the summary table, and determining if said aggressor row address is stored in the summary table, and 3) (i) incrementing the count in the summary table corresponding to the victim row address in case the victim row address is already stored in the summary table, and/or pruning the row address and the corresponding count corresponding to the aggressor row address from the summary table in case the aggressor row address is already stored in the summary table, or (ii) adding the victim row address to the summary table in case less than N row addresses are stored in the summary table, and setting the corresponding count to the added victim row address to '1', or (iii) incrementing the spillover counter in case the victim row address is not stored in the summary table and in case N row addresses are already stored in the summary table, comparing the count of the incremented spillover counter to the counts in the summary table to identify a potential replacement entry in the summary table with a corresponding replacement count below the count of the incremented spillover counter, and replacing the stored row address of the replacement entry, in case said replacement entry exists, with the victim row address and the corresponding replacement count with the count of the incremented spillover counter, 4) refreshing, subsequent to the TRR event, V matrix rows of the matrix of cells, the refreshed V matrix rows corresponding to the stored row addresses in the summary table with the V highest corresponding counts at the TRR event, and pruning the stored row addresses and the corresponding counts corresponding to the V refreshed matrix rows from the summary table, determining if the TRR event is temporally removed from the last spillover counter refresh time by a defined time tREFW, and setting the spillover counter to zero and pruning all stored row addresses and the corresponding counts from the summary table in case the TRR event is temporally removed from the last spillover counter refresh time by the defined time tREFW.

The method steps 2) and 3) provide a space-optimal summary process, i.e., the V matrix rows which are accessed most often are guaranteed to be inserted into the summary table. The term accessing is understood to refer to indirect accessing. An aggressor matrix row is directly accessed as part of a Rowhammer attack, and a potential victim matrix row linked to the directly accessed aggressor matrix row is indirectly accessed, for the direct accessing of the aggressor matrix row may lead to bit flipping in the indirectly accessed victim matrix row.

In an embodiment of the method according to the invention, the TRR event is provided as part of a refresh (REF) event, wherein said REF event is issued by a memory controller to the DRAM module.

The REF command is typically issued by the memory controller to the DRAM module in order to refresh DRAM memory.

In a further embodiment of the method according to the invention, the TRR event is periodically provided as part of every d-th REF event, and wherein REF events are periodically issued by the memory controller to the DRAM module, and wherein d is a natural number.

In a further embodiment of the method according to the invention, the determining if the TRR event is temporally removed from the last spillover counter refresh time by the defined time tREFW is based on counting the number of REF events received by the DRAM module and/or is based on counting clock cycles of an internal clock in the DRAM module and/or is based on using a timer.

Besides counting REF events, counting clock cycles and/or using a timer can be used for determining if the defined time tREFW has passed since the last spillover counter refresh time. Once the predefined time tREFW has passed since the last spillover counter refresh time, all stored row addresses and corresponding counts are pruned from the summary table, and the spillover counter is set to zero.

In a further embodiment of the method according to the invention, the TRR event is provided as part of a Refresh Management (RFM) event, and wherein said RFM event is issued by the memory controller and is issued between two consecutive REF events.

The RFM event is part of Double Data Rate 5 Synchronous Dynamic Random-Access Memory (DDR5).

In a further embodiment of the method according to the invention, the summary table is embodied as content-addressable memory.

Using content-addressable memory, a victim row address can be directly used as key for searching the summary table.

In a further embodiment of the method according to the invention, N and *V* are provided as follows: based on a DRAM-module-specific vulnerability threshold R and the time tREFW in which all matrix rows are guaranteed to be refreshed by the periodic REF events and based on a deterministic Rowhammer attack model, an optimized *V* and an optimized number of TRR events are determined such that a maximum number of times the deterministic Rowhammer attack model can influence the victim matrix row is below R, and N is determined by multiplying the determined optimized V by the determined optimized number of TRR events.

The deterministic Rowhammer attack model may be different than the Rowhammer attack. The deterministic Rowhammer attack model is set up in such a way as to be optimally tailored to a specific protection method used for protecting DRAM. On a DRAM module implementing the method according to the invention for protecting the DRAM module against the Rowhammer attack, the determining of *N* and *V* may not be carried out. Instead, already determined values of N and *V* may be used during DRAM runtime.

According to a second aspect of the present invention there is provided a method for determining parameters used by the protection method according to the first aspect of the present invention.

According to the second aspect, there is provided a method for determining *N* and V, suitable for use in a method according to the first aspect of the present invention. The method for determining *N* and *V* comprises the following steps: 1) receiving a DRAM-module-specific vulnerability threshold R, 2) receiving a time tREFW in which all matrix rows are guaranteed to be refreshed by the periodic REF events, 3) determining, using a deterministic Rowhammer attack model, an optimized *V* and an optimized number of TRR events such that a maximum number of times the deterministic Rowhammer attack model can influence the victim matrix row is just below R, wherein the deterministic Rowhammer attack model is optimal with respect to the protection method according to any of claims 1 to 5, and determining N based on the determined optimized V and the determined optimized number of TRR events, and providing the determined N and V as output.

In an embodiment of the method according to the second aspect, N is determined by multiplying the determined optimized V by the determined optimized number of TRR events.

In a further embodiment of the method according to the second aspect, the deterministic Rowhammer attack model is configured to have access to a plurality of decoy matrix rows in the matrix of cells, wherein the decoy matrix rows comprise the victim matrix row, wherein the protection method according to the first aspect of the present invention is configured to remove *V* decoy matrix rows at each TRR event, wherein the deterministic Rowhammer attack model is configured to increase, between any two consecutive TRR events, the count of at least a part of remaining decoy matrix rows by 1.

The remaining decoy matrix rows are those decoy matrix rows which have not yet been removed after TRR events. Due to the protection method according to the first aspect of the present invention, the set of remaining decoy matrix rows is a shrinking set, i.e., after each TRR event, the size of the set shrinks by *V.*

In a further embodiment of the method according to the second aspect, the number of decoy matrix rows is determined based on the number of TRR events in tREFW and on *V.*

According to a further aspect of the present invention there is provided a computer program product comprising instructions which when executed by a computer, cause the computer to carry out a method according to the second aspect of the present invention.

The computer program product may be executed on a computer, and the results provided by the computer program product may be used as parameters of a protection method according to the first aspect of the present invention on a DRAM module.

According to a further aspect of the present invention there is provided a DRAM module comprising at least one rank, wherein each rank of the at least one rank comprises at least one bank, and wherein each bank of the at least one bank comprises a matrix of cells having a plurality of matrix rows, wherein each cell of the matrix of cells is configured to store information in a state of a capacitor comprised by said cell, and wherein for at least one protected bank the DRAM module comprises an associative memory configured to store at most N row addresses with N corresponding counters, a spillover counter, and (i) a REF counter counting the number of REF commands received by the DRAM module from a memory controller and/or (ii) a clock cycle counter counting clock cycles of an internal clock in the DRAM module (1) and/or (iii) a timer, wherein the DRAM module is configured to carry out a method according to the first aspect of the present invention for the at least one protected bank of the DRAM module.

### Brief description of drawings

Exemplar embodiments of the invention are disclosed in the description and illustrated by the drawings in which:
Figure 1 shows a schematic depiction of principal abstractions of a DRAM module;
Figure 2 shows a schematic depiction of an embodiment of the method according to the invention for protecting a DRAM module against a Rowhammer attack during operation of the DRAM module; and
Figure 3 shows a schematic depiction of a process for determining parameters used in the method for protecting a DRAM module against Rowhammer attacks.

### Detailed description of drawings

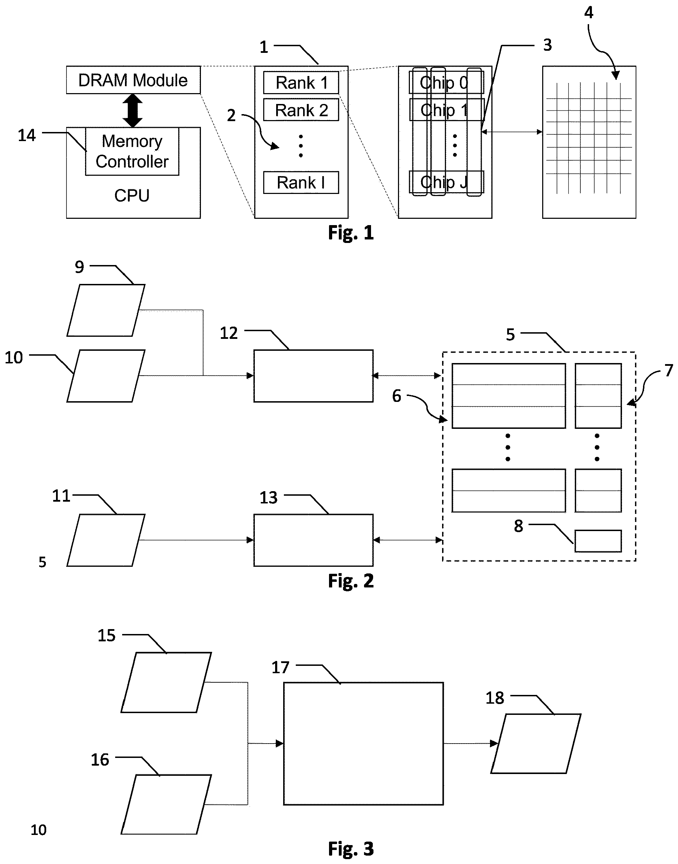

**Fig. 1** shows a schematic depiction of principal abstractions of a DRAM module 1. An external memory controller 14, which memory controller 14 is, e.g., part of a central processing unit (CPU), is configured for at least partly controlling the DRAM module 1. The memory controller is configured to access the DRAM module 1 via a channel, e.g., to transmit read/write instructions or refresh (REF) instructions to the DRAM module 1.

A DRAM module 1 typically comprises a plurality of ranks 2, e.g., *I* ranks in Fig. 1. Each rank may comprise a plurality of underlying physical DRAM chips, e.g., rank 1 may comprise J DRAM chips. The memory controller 14, however, may typically not be aware of how each rank is physically realized by DRAM chips. Instead, the memory controller 14 may typically use a plurality of banks 3 to logically organize memory in a rank. As shown in Fig. 1, each bank typically represents memory in a plurality of DRAM chips. Each bank comprises a matrix of cells 4, wherein each memory cell in the matrix of cells 4 comprises a capacitor and a transistor. Information is stored in the capacitors of the memory cells. The matrix of cells 4 is typically provided as a 2D rectangular array comprising a plurality of matrix rows and matrix columns, wherein each matrix row of the matrix of cells 4 comprises a row address, and each matrix column of the matrix of cells 4 comprises a column address. Each rank and bank are furthermore typically provided with additional addressing circuitry, through which, e.g., a row of the matrix of cells 4 may be accessed.

In DRAM, it is necessary to periodically refresh memory cells as the capacitors used for storing information have a natural discharge rate. Typically, a time tREFW, e.g., equal to 64 ms, is provided in which it is guaranteed that all memory cells will be refreshed. To refresh memory cells, the memory controller 14 typically periodically issues REF instructions to the DRAM module 1, and for each REF instruction the DRAM module 1 typically refreshes a plurality of matrix rows. In between REF instructions, other instructions may be provided by the memory controller 14 to the DRAM module 1, e.g., read and write instructions, and/or Refresh Management (RFM) instructions in case of the DDR5 standard.

**Fig. 2** shows a schematic depiction of an embodiment of the method according to the invention for protecting a DRAM module 1 against a Rowhammer attack during operation of the DRAM module 1. The method for protecting the DRAM module 1 against a Rowhammer attack may be implemented on the DRAM module 1 itself.

In case a matrix row is accessed sufficiently often, e.g., through an activate (ACT) command connecting the activated matrix row to a row buffer, neighboring rows of the accessed matrix row may become prone to experience bit flips. The term neighboring rows may be understood to refer to directly neighboring rows, or to matrix rows being further apart, e.g., having an intermediate row between an accessed row and a neighboring row. An accessed matrix row may be termed aggressor matrix row, and neighboring rows prone to experience bit flips due to the accessing of the aggressor matrix row may be termed victim matrix rows. By accessing an aggressor matrix row, a victim matrix row may therefore be considered to have been indirectly accessed. When an aggressor matrix row is accessed, a hypothetical counter of a victim matrix row linked to the accessed aggressor matrix row may be incremented, which hypothetical counter is indicative of the likelihood of experiencing bit flips in the victim matrix row. Accessing an aggressor matrix row may create a plurality of victim matrix rows, e.g., four victim matrix rows symmetrically distributed around the aggressor matrix row.

A DRAM vendor will typically be able to estimate a worst-case threshold R for a DRAM module 1, which threshold R is such that if the hypothetical counter of a victim matrix row is above R the victim matrix row may experience bit flips. As the DRAM standard specifies that every time tREFW each matrix row is guaranteed to be refreshed, the hypothetical counter of a victim matrix row is guaranteed to be reset every tREFW. To enable bit flips in a victim matrix row, aggressor matrix row(s) therefore need to be accessed more than R times in time tREFW.

The method according to the invention for protecting a DRAM module 1 against Rowhammer attacks is such that, using a proactive mitigation method as discussed in the following and using suitably chosen parameters, it is guaranteed that no victim matrix row will be indirectly accessed more than R times in time tREFW. This guarantee holds for all possible specific attack patterns used in a Rowhammer attack.

Control actions issued by the memory controller 14 access matrix rows in the DRAM module 1, thereby increasing indirect accesses to victim matrix rows. A bank in the DRAM module 1, which bank is to be protected by the method according to the invention, is equipped with a summary table 5, which summary table 5 is used for keeping track of the most often (indirectly - via accessing linked aggressor matrix row(s)) accessed victim matrix rows. The summary table 5 comprises at most N entries, wherein N is a parameter which is specifically determined for ensuring that no Rowhammer attack can be successfully applied to the protected bank. The determining of parameter N, as well as of other parameters, is described in the description of Fig. 3. Each entry of the summary table 5 is configured for storing a victim row address 6 of a victim matrix row and a corresponding count 7 indicative of how often the victim matrix row was indirectly accessed.

Whenever a victim matrix row in the bank to be protected is indirectly accessed, the corresponding victim row address is compared to the stored row addresses 6 in the summary table 5. Upon receiving a victim row address 11, the following branched processing occurs: 1) In case the received victim row address 11 is already stored in the summary table 5, the count corresponding to the already stored victim row address is incremented by one, 2) In case fewer than N row addresses are stored in the summary table 5, the received victim row address 11 is stored in the summary table, and the corresponding count is set to 1, 3) In case N row addresses are already stored in the summary table 5 and in case the received victim row address 11 is not already stored in the summary table 5, a spillover counter 8, which spillover counter 8 is a part of the summary table 5, is incremented by 1. The value of the incremented spillover counter is then compared to the values of all counts in the summary table 5, and in case a stored row address in the summary table 5 has a corresponding count whose value is lower than the value of the incremented spillover counter, this stored row address gets replaced by the received victim row address 11, and the value of the corresponding count of this stored row address gets replaced with the value of the incremented spillover counter. At any given time, the summary table 5 therefore keeps track of the victim matrix rows which are most often (indirectly) accessed.

Each bank in the DRAM module 1 may be provided with its own summary table 5 and its own spillover counter 8.

Furthermore, whenever a victim matrix row in the bank to be protected is indirectly accessed, a corresponding aggressor matrix row has been directly accessed. The aggressor row address 11 of the aggressor matrix row is also compared to the entries already stored in the summary table: in case an entry in the summary table already exists, which corresponds to the aggressor row address, the corresponding entry is pruned from the summary table, for an activated matrix row may be also considered to have been refreshed.

Due to the natural discharge rate of capacitors in memory cells of a DRAM module 1, memory cells are typically periodically refreshed, wherein the memory controller 14 periodically provides REF commands to the DRAM module 1. It is hence guaranteed that all memory cells are refreshed every tREFW. The protection method according to the invention may be implemented on top of this physically necessary updating mechanism. In the method for protecting a DRAM module 1 against Rowhammer attacks according to the invention, additional matrix rows - additional understood to refer to matrix rows updated on top of those matrix rows which anyways would be updated due to the already present REF mechanism - are refreshed whenever a target row refresh (TRR) event 9 is provided.

At a TRR event 9, the V 10 stored row addresses with corresponding highest count values - at the time of the TRR event 9 - in the summary table 5 are determined 12. The determining of parameter V is described in the description of Fig. 3. The TRR event 9 may be provided as part of a REF event by the memory controller 14 or may be provided as part of a RFM event by the memory controller 14. TRR events 9 may also be periodically provided, e.g., as part of every d-th REF event, d being a natural number greater than zero. The matrix rows corresponding to the determined V stored row addresses are then refreshed 12, and the summary table 5 is pruned 12, i.e., the determined *V* row addresses and the corresponding counts are removed from the summary table 5.

The spillover counter 8 is set to zero every tREFW. By counting the number of REF events received by the DRAM module 1, e.g., in a dedicated REF counter, and/or by counting clock cycles of an internal clock in the DRAM module 1 and/or by using a timer, the DRAM module 1 can determine if a TRR event 9 is tREFW time removed from a last spillover counter refresh time at which the spillover counter 8 was set to zero. If tREFW time has passed, the spillover counter 8 is again set to zero, and the last spillover counter refresh time may be changed to the time at which the spillover counter 8 is again set to zero. Additionally, all entries currently stored in the summary table 5 are pruned. Since each bank in the DRAM module 1 may have its own summary table 5 and its own spillover counter 8, this overall refresh operation at which both the spillover counter 8 is set to zero and all entries in the summary table 5 are pruned may be independently carried out for each bank.

The method according to the invention for protecting a DRAM module 1 against Rowhammer attacks during operation of the DRAM module therefore comprises two independent but interlinked processes: 1) a summary process implemented using a summary table 5 for each bank of the DRAM module 1 to be protected, 2) and a refresh process in which matrix rows are refreshed and the summary table(s) 5 are pruned. The summary process may be continuously operating on each bank of the DRAM module 1 to be protected, i.e., the summary process may provide a summary of *all* accessing actions and may in particular also count accessing actions due to REF and/or RFM commands. Directly accessed matrix rows - in case their row address is already stored in the summary table 5 - are pruned from the summary table 5 after direct access. The refresh process, on the other hand, is only active subsequent to a TRR event 9, and is configured to refresh matrix rows based on the summary table(s) 5 and to prune the summary table(s) 5.

**Fig. 3** shows a schematic depiction of a process for determining parameters used in the method according to the invention for protecting a DRAM module 1 against Rowhammer attacks.

To provide a deterministic guarantee that no Rowhammer attack on a DRAM module 1 can be successful, the following general strategy may be employed: if the threshold R as previously introduced is known - e.g., through experiments carried out by a DRAM vendor - above which bit flips in victim matrix rows may occur and below which no bit flips may occur, a deterministic guarantee involves determining a parametrized protection method with suitably chosen parameter values so that *no* Rowhammer attack is able to indirectly access any victim matrix row more than R times before being refreshed. As discussed in the following, such a guarantee may be provided by constructing an optimal Rowhammer attack model.

In general terms, an optimal Rowhammer attack may be constructed based on the following observations: if too many indirect accesses to a victim matrix row have taken place, a mitigation strategy counting indirect accesses to matrix rows would quickly identify the victim matrix row and refresh it; the attack strategy may therefore comprise using a sufficient number of decoy matrix rows to 'shield' a victim matrix row from a mitigation strategy; if, at a TRR event, at least *V* decoy matrix rows have indirect access counts which are equal (or larger) than the count corresponding to the victim matrix row, the mitigation method would not refresh the victim matrix row but said *V* decoy matrix rows; since these *V* decoy matrix rows are anyway removed, having too many indirect accesses of these *V* decoy matrix rows would be a waste of activations; for optimality reasons, the number of indirect accesses to said *V* decoy matrix rows should therefore be a small as possible while still shielding the victim matrix row from the mitigation strategy. The decoy matrix rows should therefore ideally be indirectly accessed in unison: if *V* decoy matrix rows are refreshed at a TRR event, there should be *V* different decoy matrix rows that have previously been indirectly accessed sufficiently often so that the *T* possible activations before the next TRR event are sufficient to increase the counts of the *V* different decoy matrix rows so that they still shield the victim matrix row.

In an ideal protection (mitigation) situation, each matrix row may be equipped with its own counter for counting (indirect) accesses to said matrix row. A mathematically optimal Rowhammer attack model for this protection situation may be constructed as follows for DDR4: in time tREFW, a maximum number of activations (accesses) A_{T} are possible; it is furthermore assumed that T activations may occur between two consecutive TRR events; A_{T}/T TRR events can therefore occur in time tREFW; A_{T}^{∗}*V*/T decoy matrix rows, which decoy matrix rows comprise a victim matrix row, may be used by the optimal Rowhammer attack model; a number of aggressor matrix rows can be initialized, which aggressor matrix rows are chosen so that A_{T}^{∗}*V*/T matrix rows correspond to the chosen aggressor matrix rows. If each direct accessing of an aggressor matrix row influences B victim matrix rows, the number of aggressor matrix rows corresponding to the A_{T}^{∗}*V*/T decoy matrix rows is equal to (A_{T}^{∗}*V*)/(T^{∗}*B*). The number B may typically be equal to 2 or 4. Between any two TRR events, at least a part of remaining decoy matrix rows is (indirectly) accessed once (their counters are therefore increased by 1 as well). In case the number of (remaining) decoy matrix rows is, however, larger than T, not all (remaining) decoy matrix rows will be able to be indirectly accessed between two consecutive TRR events. Given the number B of victim matrix rows which one aggressor matrix row may influence and given T possible activations between two consecutive TRR events, T^{∗}*B* decoy matrix rows may be indirectly accessed between two consecutive TRR events. The T^{∗}*B* decoy matrix rows which are selected from the (remaining) decoy matrix rows may be selected in a round robin manner, i.e., indirect accesses to decoy matrix rows should be as equally distributed as possible. At each TRR event, the decoy matrix rows with the V highest counts are removed. The mathematically optimal Rowhammer attack model may therefore be constructed in such a way that in case of an ideal protection, the victim matrix row may not be refreshed due to TRR events. In case of DDR5, above optimal Rowhammer attack model may be modified to take into account the possible presence of additional TRR events as part of RFM events. RFM events can, e.g., be issued by a memory controller 14 after a predefined number of activations; alternatively, a memory controller 14 may also issue RFM events after a multiple of the predefined number of activations; alternatively, a memory controller 14 may also structure the sending out of RFM commands in such a way that RFM commands are preferentially sent out during idle periods of the DRAM module 1 in which there is no high load on the DRAM module 1.

It is crucial to observe that in case V is chosen sufficiently large, or in case T is sufficiently small, the count corresponding to the victim matrix row, which victim matrix row is part of the decoy matrix rows, after the last TRR event in time tREFW will be below R. A large V, however, is in general not beneficial as may lead to an increased power consumption of a DRAM module 1. A small T, on the other hand, is in general not beneficial as it lowers the number of possible interactions between DRAM module 1 and memory controller 14.

In some DRAM modules 1, sub-array parallelism may be implemented. Sub-array parallelism refers to a situation in which the (logical) memory of a bank is further divided into a plurality of blocks, wherein each block can perform a TRR operation in parallel to TRR operations performed in other blocks. If TRR events are carried out in S blocks in parallel, *S*^{∗}*V* matrix rows are refreshed in parallel. In an optimal Rowhammer attack model, aggressor rows are equally distributed over all subarrays in a bank.

In the method according to the invention for protecting against Rowhammer during DRAM runtime, *N* and *V* are used as parameters. These parameters may be determined as follows: tREFW 16 and R 15 are provided as input to a parameter determination part 17. In time tREFW, the number of TRR events and *V* may be varied until values for these two parameters are identified which - upon a simulated Rowhammer attack using an optimal Rowhammer attack model - lead to a victim matrix row having a number of indirect accesses below R, in particular just below R. The term just below R is understood to refer to a parameter value choice which - upon a (smallest possible) change of the parameter values away from the determined optimum values - either pushes the number of indirect accesses above R or makes the number of indirect accesses smaller. The latter case is not optimal as a protection method which uses these parameters may use too many resources without providing additional protection. The number of entries in the summary table 5 N may then be determined by multiplying the optimized number of TRR events and *V* which product may also correspond to the number of decoy matrix rows used by the optimal Rowhammer attack model. In case the method according to the invention for protecting against Rowhammer during DRAM runtime is run with parameters so determined 17, no victim matrix row will acquire a count larger than R: such a protection scheme is therefore deterministically secure. N and Vare provided as output 18 of the parameter determination part 17.

Alternatively, in case N and R are provided, N, e.g., being pre-set by a DRAM vendor due to hardware constraints, the optimal Rowhammer attack model may be used for determining, using simulation, a *V* which ensures that a number of indirect accesses of a victim matrix row will be below R.

## Claims

1. Method for protecting a DRAM module (1) against a Rowhammer attack during operation of the DRAM module (1), the DRAM module (1) comprising at least one rank (2), wherein each rank of the at least one rank (2) comprises at least one bank (3), and wherein each bank of the at least one bank (3) comprises a matrix of cells (4) having a plurality of matrix rows, wherein each cell of the matrix of cells (4) is configured to store information in a state of a capacitor comprised by said cell, and wherein each matrix row of the plurality of matrix rows comprises a row address through which the matrix row is addressable, the method using, (a) a summary table (5) having at most N entries, wherein each entry of the at most N entries is configured for storing a row address (6) and a corresponding count (7) indicative of a number of access operations carried out on the matrix row corresponding to the stored row address, and a spillover counter (8), (b) a target row refresh (TRR) event (9) to be carried out by the DRAM module (1), (c) a TRR volume *V* (10) corresponding to a refresh number of matrix rows which are to be refreshed at the TRR event (9), and (d) a last spillover counter refresh time, wherein the method comprises as steps: 1) receiving a victim row address (11) of a victim matrix row susceptible to the Rowhammer attack and an aggressor row address (11) of an aggressor matrix row related to said victim matrix row, 2) determining (13) if said victim row address is stored in the summary table, and determining (13) if said aggressor row address (11) is stored in the summary table, and 3) (i) incrementing (13) the count in the summary table (5) corresponding to the victim row address (11) in case the victim row address is already stored in the summary table (5), and/or pruning (13) the row address and the corresponding count corresponding to the aggressor row address (11) from the summary table (5) in case the aggressor row address is already stored in the summary table (5), or (ii) adding (13) the victim row address (11) to the summary table (5) in case less than N row addresses are stored in the summary table, and setting (13) the corresponding count to the added victim row address to '1', or (iii) incrementing (13) the spillover counter (8) in case the victim row address (11) is not stored in the summary table (5) and in case N row addresses are already stored in the summary table, comparing (13) the count of the incremented spillover counter to the counts in the summary table to identify a potential replacement entry in the summary table with a corresponding replacement count below the count of the incremented spillover counter, and replacing (13) the stored row address of the replacement entry, in case said replacement entry exists, with the victim row address (11) and the corresponding replacement count with the count of the incremented spillover counter, 4) refreshing (12), subsequent to the TRR event (9), *V* (10) matrix rows of the matrix of cells (4), the refreshed V (10) matrix rows corresponding to the stored row addresses in the summary table (5) with the V highest corresponding counts at the TRR event (9), and pruning (12) the stored row addresses and the corresponding counts corresponding to the V refreshed matrix rows from the summary table (5), determining if the TRR event (9) is temporally removed from the last spillover counter refresh time by a defined time tREFW, and setting the spillover counter (8) to zero and pruning all stored row addresses and the corresponding counts from the summary table (5) in case the TRR event (9) is temporally removed from the last spillover counter refresh time by the defined time tREFW.

2. Method according to claim 1, wherein the TRR event (9) is provided as part of a refresh (REF) event, wherein said REF event is issued by a memory controller (14) to the DRAM module (1).

3. Method according to claim 2, wherein the TRR event (9) is periodically provided as part of every d-th REF event, and wherein REF events are periodically issued by the memory controller (14) to the DRAM module (1), and wherein d is a natural number.

4. Method according to claim 3, wherein the determining if the TRR event (9) is temporally removed from the last spillover counter refresh time by the defined time tREFW is based on counting the number of REF events received by the DRAM module (1) and/or is based on counting clock cycles of an internal clock in the DRAM module and/or is based on using a timer.

5. Method according to any of the preceding claims, wherein the TRR event (9) is provided as part of a Refresh Management (RFM) event, wherein said RFM event is issued by the memory controller (14) and is issued between two consecutive REF events.

6. Method according to any of the preceding claims, wherein the summary table (5) is embodied as content-addressable memory.

7. Method according to any of the preceding claims, wherein *N* and *V* are provided as follows: based on a DRAM-module-specific vulnerability threshold R (15) and the time tREFW (16) in which all matrix rows are guaranteed to be refreshed by the periodic REF events and based on a deterministic Rowhammer attack model, an optimized *V* and an optimized number of TRR events are determined such that a maximum number of times the deterministic Rowhammer attack model can influence the victim matrix row is below *R* (15), and wherein *N* is determined by multiplying the determined optimized *V* by the determined optimized number of TRR events.

8. Method for determining *N* and *V*, suitable for use in a method according to any of claims 1 to 6, the method for determining N and V comprises the following steps: 1) receiving a DRAM-module-specific vulnerability threshold R (15), 2) receiving a time tREFW (16) in which all matrix rows are guaranteed to be refreshed by the periodic REF events, 3) determining (17), using a deterministic Rowhammer attack model, an optimized *V* and an optimized number of TRR events such that a maximum number of times the deterministic Rowhammer attack model can influence the victim matrix row is just below *R* (15), wherein the deterministic Rowhammer attack model is optimal with respect to the protection method according to any of claims 1 to 6, and determining *N* based on the determined optimized *V* and the determined optimized number of TRR events, and providing the determined *N* and *V* as output (18).

9. Method according to claim 8, wherein *N* is determined (17) by multiplying the determined optimized *V* by the determined optimized number of TRR events.

10. Method according to claim 8 or 9, wherein the deterministic Rowhammer attack model is configured to have access to a plurality of decoy matrix rows in the matrix of cells (4), wherein the decoy matrix rows comprise the victim matrix row, wherein the protection method according to any of claims 1 to 6 is configured to remove *V* decoy matrix rows at each TRR event (9), wherein the deterministic Rowhammer attack model is configured to increase, between any two consecutive TRR events (9), the count of at least a part of remaining decoy matrix rows by 1.

11. Method according to claim 10, wherein the number of decoy matrix rows is determined based on the number of TRR events in tREFW (16) and on *V* (10).

12. Computer program product comprising instructions which when executed by a computer, cause the computer to carry out a method according to one of claims 8 to 11.

13. DRAM module (1) comprising at least one rank (2), wherein each rank of the at least one rank comprises at least one bank (3), and wherein each bank of the at least one bank (3) comprises a matrix of cells (4) having a plurality of matrix rows, wherein each cell of the matrix of cells (4) is configured to store information in a state of a capacitor comprised by said cell, and wherein for at least one protected bank the DRAM module (1) comprises an associative memory (5) configured to store at most N row addresses (6) with N corresponding counters (7), a spillover counter (8) and (i) a REF counter counting the number of REF commands received by the DRAM module (1) from a memory controller (14) and/or (ii) a clock cycle counter counting clock cycles of an internal clock in the DRAM module (1) and/or (iii) a timer, wherein the DRAM module (1) is configured to carry out a method according to any of claims 1 to 6 for the at least one protected bank of the DRAM module (1).
